# EUROPEAN PATENT APPLICATION

(11) **EP 3 570 444 A1**
(43) Date of publication of application: **20.11.2019**
(21) Application number: 19171156.3
(22) Date of filing: 25.04.2019
(51) Int. Cl.: H04B 1/00, H04B 1/38, H04W 88/08, H04B 1/40

(54) **FIBER INTEGRATED RADIO EQUIPMENT FOR NETWORK OPTIMIZATION AND DENSIFICATION ECOSYSTEM (FIRE-NODE)**

(30) Priority: 26.04.2018 US 201862663044 P; 04.05.2018 US 201862667135 P; 23.04.2019 US 201916392196
(71) Applicant: Amphenol Antenna Solutions Inc., Rockford, Illinois 61109 (US)
(72) Inventor: Ho, Jimmy, Hickory, NC North Carolina 28601 (US); Riek, Justin, Taylorsville, NC North Carolina 28681 (US); Fournier, André F.A., Marietta, GA Georgia 30064 (US)
(74) Representative: P&TS SA (AG, Ltd.)

(57) **Abstract**

An integrated radio base station has an elongate structural support member and a non-conductive dielectric cover, together forming a weather-protective housing. An internal power bus and internal data bus are located within the housing. At least one functional module is provided within the housing and has a functional electronic circuit device and an antenna, a module power bus providing power to the functional electronic circuit device and a module data bus providing data to the functional electronic circuit device. The functional module further has a functional power connector coupling the module power bus to the internal power bus, and a functional data connector coupling the module data bus to the internal data bus. The functional module also has an interface module having a power electronic circuit device to interface between a source of externally provided electrical power and the internal power bus providing electrical power conditioned to be suitable for operation of the functional electronic circuit device.

## Description

### RELATED APPLICATIONS

This application claims the benefit of U.S. Provisional Application Nos. 62/667,135, filed May 4, 2018, and 62/663,044, filed April 26, 2018. The entire contents of those applications are incorporated herein by reference.

### FIELD OF THE INVENTION

The object of the invention is to provide a compact, expandable and aesthetically pleasing arrangement for a mobile radio base station, particularly a low power base station, housing equipment supporting multiple channels and protocols, together with sensors, cameras or other equipment.

### BACKGROUND OF THE INVENTION

The development and expansion of macro cellular radio services has led to the proliferation of antennas and associated hardware such as filters and tower-mounted remote radio units (RRUs). Continued expansion is hampered by the lack of space on supporting structures, the high wind load that results from an assemblage of multiple separate pieces of radio equipment and antennas, and their unacceptable visual profile.

Small cells provide mobile radio services over smaller distances than the higher powered macrocells, so the size and weight of the associated antennas and radio equipment is smaller. It was expected by network operators that small cells, which add capacity and coverage to complement that provided by macrocells, could be mounted on lightweight structures, including existing infrastructure poles, and would present no significant issues in terms of public acceptability, requiring minimal additional planning/zoning permission.

Unfortunately, this has proved not to be the case. Small cells are typically deployed on lighting poles, bus shelters, the sides of buildings, or power lines, in any area where it is possible to put them without creating objections by local residents. In practice, equipment installed by multiple network operators, and supporting a variety of radio interface standards, is already cluttering the visual environment. Unless an improved solution is implemented, extension of the existing infrastructure to provide 5G and other future services can only exacerbate the present unsatisfactory situation, which is already receiving criticism in the media.

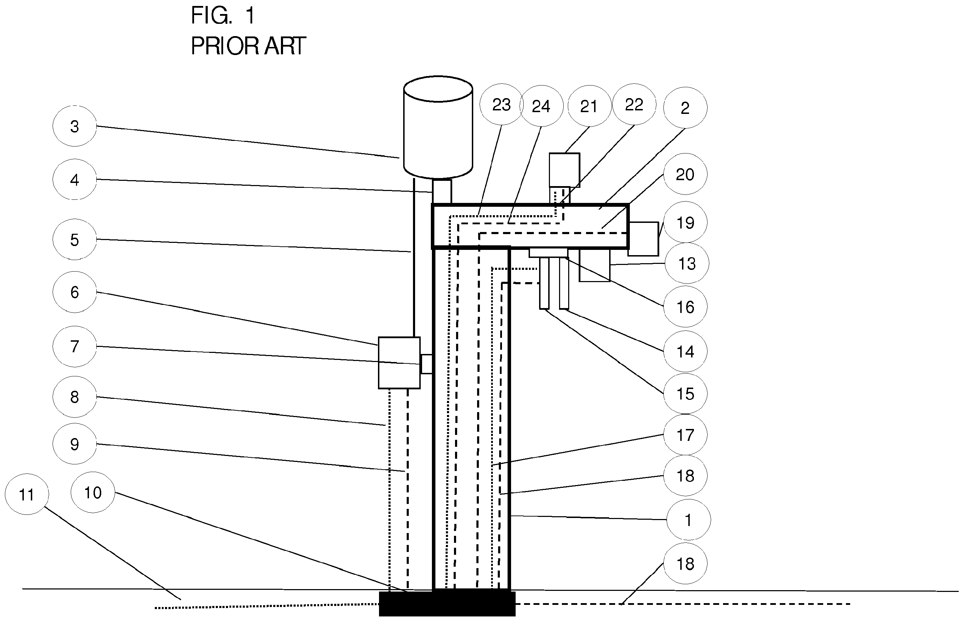

As shown in FIG. 1, a typical small cell deployment has many of the same items of equipment as a macrocell, comprising an antenna, a remote radio unit (RRU), coaxial jumper cables, a power cable, AISG control cables and an optical fiber connection to the fixed network. The addition of a second network requires the duplication of all these facilities, adding weight and windload, and requiring additional space on the pole and the brackets to secure them in place. The history of mobile radio systems has shown that it is increasingly difficult to decommission older base station systems as newer systems are introduced because of the high cost of the installed base of handsets, sensors and other equipment - for example smart meters - that rely on the continuing operation of the older systems. However, there is resistance in many neighborhoods to the unsightly growth of small cells in the manner illustrated in FIG. 1.

Small cells are typically arranged to create full 360° azimuthal coverage, obtained by combining multiple antenna arrays firing radially in directions separated in azimuth bearing, typically by 120°. While this is a low cost solution, it typically creates an azimuthal radiation pattern, referred to as a pseudo-omnidirectional pattern, which may depart significantly from an ideal circle.

A variety of environmental sensors are commonly co-located with small cells, whose connectivity provides a route for the collected data. Such sensors may include cameras, meteorological sensors and air quality monitors. While these serve necessary requirements they further add to visual clutter. Hereinafter these are collectively referred to as IoT (internet of things) devices.

There are several prior art solutions that hide the unsightly radios, brackets and cables in a small cell, a typical example being a small cell "smart pole" outlined in patent application US2017/0279187 A1. This describes methods to hide the radio equipment in the interior of a precast concrete pole and route the cables inside it to the antenna. This hides the unsightly radio equipment, but requires new deployments of poles. It is a good solution for new site installations but the replacement of existing poles is not cost effective considering the relatively low cost of the radio equipment and antennas to be installed on it.

FIG. 1 shows a typical small urban base station installation according to prior art wherein a structural member 1 and additional lateral supporting member 2 support an assemblage of radio and other devices. The base station has a mobile radio base station antenna 3 supported on a mounting bracket 4 and connected by means of a coaxial cable 5 to a radio unit 6 supported by mounting bracket 7, connected to the fixed network by means of a communications line 8, typically being an optical fiber 11 connected through a termination box/router 10, and a power supply cable 9. WiFi antennas 14, 15 supported by a mounting bracket 16 and connected to a radio unit 13 connected to the fixed network by a means of a communications line 17, typically being an optical fiber, and a power supply cable 18. The installation also includes a luminaire 19 for street lighting, connected by a power supply cable 20, and a camera 21 supported on a mounting bracket 22 and connected to the fixed network by a means of a communications line 23, typically being an optical fiber or Ethernet, and a power supply cable 24.

Catenary wires, typically supported by concrete, metal or wooden utility poles, are widely used to support existing power and/or communications cables, together with ancillary equipment such as repeaters and amplifiers. It is known to provide "fiber nodes" on such catenary cables whose function is to convert optical signals to radio frequency (RF) signals to be delivered to homes.

In the light of the foregoing, there exists a need for an integrated and economic solution that can be deployed on existing infrastructure in large numbers to provide for the expansion of small cells to provide the increased capacity needed. Such base stations should preferably provide for multiple current communications technologies and for new technologies as these become available in the future, optionally sharing with other public infrastructure hardware such as street lighting, traffic cameras and sensors. The present invention provides a solution that is attractive both to operators and to the communities they serve.

### SUMMARY OF THE INVENTION

According to the invention there is provided a novel integrated and expandable hardware and communications platform designated a Fiber Integrated Radio Equipment for Network Optimization & Densification Ecosystem (FIRE-NODE). A FIRE-NODE fully integrates antennas, radios and associated computational and data management circuit arrangements into one physical enclosure, and provides shared single external connections for fixed network connectivity, power and control facilities. This provides an aesthetically pleasing appearance, higher reliability, improved technical performance and lower cost for operation and future expansion. It realizes the possibility of the cooperative development of small cells and other public infrastructure, enabled by its provision of standard common facilities.

According to a first embodiment, a FIRE-NODE is a small cylindrical housing providing accommodation for more than one wireless technology, IoT devices, cameras and sensors, using a single power line and a single optical input. In the preferred embodiment, the radio architecture is modular with a distributed structure that facilitates thermal dissipation within the base station enclosure.

According to a second embodiment a FIRE-NODE is in the form of a rectangular panel with a metallic back frame that may incorporate heat-dissipating fins to provide cooling for the enclosed electronics modules. Such an arrangement provides an external appearance similar to that of the standard macro cellular construction with each FIRE-NODE forming a panel; multiple panels may grouped to serve users in a multiple azimuth sectors each typically 120° wide.

According to a third embodiment a FIRE-NODE is housed in a protective radome and is supported from a substantially horizontal catenary wire, typically stretched between utility poles or buildings. Such an arrangement may comprise two assemblies of functional modules positioned to provide service to users on both sides of the supporting catenary wire. For reference, this FIRE-NODE will be referred to as a **S**trand **L**ine **M**ount FIRE-NODE or SLiM FIRE-NODE for short.

It will be understood that the application of the present invention provides a means by which the functionality of existing urban and rural utility infrastructure may be substantially increased.

A FIRE-NODE according to the invention is provided with at least one input power port, and at least one external communication port which may have any preferred physical interface(s) (for example coaxial line or optical fiber) and may use any chosen data protocol (for example Ethernet).

Internal arrangements within the FIRE-NODE distribute the power and external communications facilities to the contained multiple radio units and other electronic circuits to enable their independent operation and provision of wireless coverage to serve surrounding users.

Some of the main technical advantages of the approach provided by the present invention are:
i. the effective gain of contained antennas is increased by the elimination of external coaxial jumper cables connecting separate units of radio equipment;
ii. installation time and effort are reduced since only one physical unit is deployed instead of numerous separate and interconnected units as required by prior art;
iii. fewer power lines and signal lines as well as less mounting space are required by comparison with prior art arrangements since connectivity and physical accommodation are shared between multiple installed devices, including devices using different technologies (for example 3G, 4G, 5G, WiFi) and functionalities (for example radio units, sensors and cameras);
iv. the visual profile of a FIRE-NODE is less cluttered than a prior art arrangement of separate units.

### BRIEF DESCRIPTION OF DRAWINGS

FIG. 1 shows a typical deployment according to prior art, includes a base station antenna, a mobile radio unit, a WiFi access point, a street light and a camera, together with their associated connections to the fixed data and power infrastructure.
FIG. 2 shows a block diagram of a FIRE-NODE according to the invention.
FIG. 3 is a representation of an example of the functional components of a FIRE-NODE according to the invention.
FIG. 4 is a schematic diagram showing an example of the interconnections provided by a DC power bus between a number of functional modules within a FIRE-NODE according to the invention.
FIG. 5 is a schematic diagram showing an example of the interconnections provided by a digital data bus between a number of functional modules within a FIRE-NODE according to the invention.
FIG. 6 shows a generic functional module according to the invention, having power and data bus connections physically in line.
FIG. 7 shows a generic functional module according to the invention, having physically orthogonal power and data bus connections.
FIG. 8 shows views of generic FIRE-NODE functional modules interconnected according to the invention.
FIGS. 9(a), (b) show an example of a functional module comprising WiFi radio systems and antennas.
FIG. 10 shows an example of a functional module according to the invention comprising a typical 3.5-GHz CBRS radio.
FIG. 11 shows an example of a functional module according to the invention comprising a camera and sensors.
FIG. 12 shows an example of a functional module according to the invention comprising a millimeter-wave 5G New Radio communications device.
FIGS. 13(a)-(e) show the mounting arrangements for a typical functional module.
FIGS. 14(a), (b) show an alternative arrangement by which the power and data buses may be arranged.
FIGS. 15(a), (b) show further alternative arrangement by which the power and data buses may be arranged.
FIG. 16 shows a typical assembly of functional modules within a FIRE-NODE small cell base station according to the invention
FIG. 17 Shows an alternative arrangement of functional modules in a FIRE_NODE small cell base station according to the invention.
FIG. 18 shows a schematic arrangement in which an optical fiber is directly connected to at least one functional module comprising the FIRE-NODE small cell base station according to the invention.
FIGS. 19(a), (b) show a typical assembly of a FIRE-NODE small cell base station comprising three groups functional modules with that have been daisy-chained together and configures to create a tri-sector arrangement for 360° coverage.
FIG. 20 is a lateral view of a SLiM FIRE-NODE small cell base station suspended from a catenary wire.
FIG. 21 is an axial view of a SLiM FIRE-NODE small cell base station suspended from a catenary wire
FIG. 22 shows details of a SLiM FIRE-NODE small cell base station suspended from a catenary wire.
FIG. 23 shows a SLiM FIRE NODE small cell base station comprising two groups of interconnected functional modules each housed within a protective radome and suspended from a catenary wire.
FIGS. 24(a)-(f) show heat sink arrangements for a SLiM FIRE-NODE suspended from a catenary wire.

### DETAILED DESCRIPTION OF THE INVENTION

In describing the illustrative, non-limiting embodiments of the invention illustrated in the drawings, specific terminology will be resorted to for the sake of clarity. However, the invention is not intended to be limited to the specific terms so selected, and it is to be understood that each specific term includes all technical equivalents that operate in similar manner to accomplish a similar purpose. Several embodiments of the invention are described for illustrative purposes, it being understood that the invention may be embodied in other forms not specifically shown in the drawings.

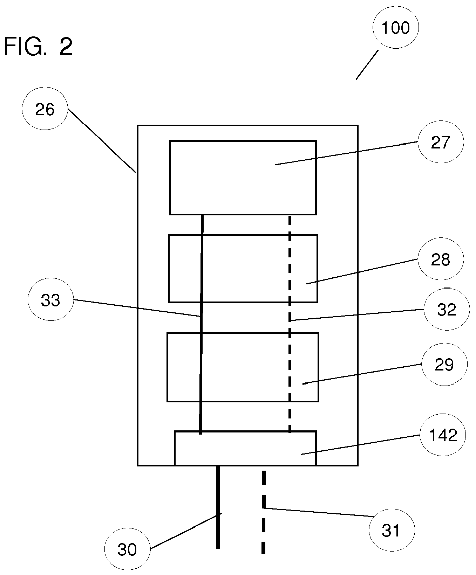

Turning to the drawings, FIG. 2 shows a FIRE-NODE small cell base station 100 in accordance with one non-limiting example embodiment of the invention. The base station 100 has a weatherproof housing 26, functional modules 27, 28, 29 and an interface module 142.

The interface module 142 has electronic circuit arrangements for the management of the functional modules 27, 28, 29, the conversion of data transmission protocols between an external data connection 31 and an internal data bus 32 connected between the interface module 142 and each of the functional modules 27, 28, 29. Further electronic circuit arrangements in the interface module 142 can convert power provided by the external power connection 30 to a level suitable for connection an internal power bus 33 to supply each of the functional modules. For example, the interface can convert the high power voltage input to a low power voltage that is suitable for the module components. Thus, the interface conditions the power and data signals to be suitable for operation of the functional modules which can, for example, include circuit devices that are low power. In addition, the functional modules can be separate and discrete devices that are substantially planar and transmit and receive data for bidirectional communications.

By way of examples, the external data connection 31 may be provided by an optical fiber or coaxial cable and may use a protocol such as eCPRI, while the internal data bus 32 may use Ethernet or other local-area network protocol. External power 30 may typically be provided at 115 V or 230 V AC, while the power bus 33 may operate at 24 V or 90 V DC. In a preferred embodiment there is provided a single external data connection and a single external power connection to interface unit 142. Having a single interface 142 avoids the necessity for each functional module to have its own power conversion and other circuitry such as lightening protection; though in one embodiment each module 83, 50, 124, 115, 119 can be directly connected to the incoming power 143 at the interface 142, and each module would include power conversion from high voltage to low voltage.

Management of the functional modules 27, 28, 29 may comprise capabilities such as the adjustment of the power, frequency and other operational parameters of radio modules, the control of one or more camera modules and sensor modules, the storage of log-files and the recording of data.

The modular format of a FIRE-NODE small cell 100 according to the invention is designed to enable the addition of further functional modules, which may extend those functionalities provided at the time of initial deployment or may provide additional functionalities. Thus, fewer or more functional modules can be provided other than the three functional modules 27, 28, 29 illustrated in the embodiment shown.

The interface module 142 may be combined with and integral to any functional module, but it may be advantageous that it be separate for logistical reasons. As shown, the functional modules 27, 28, 29 can be linearly arranged within the housing 26 of the base station 100. And, mechanical connections such as fasteners or the like can be provided to connect the functional modules 27, 28, 29 within the housing 26.

The data management capabilities of the interface module 142 preferably provide for future upgrades of operational software and hardware for the functional modules comprising the FIRE-NODE small cell and for the addition of further functional modules including modules embodying future technologies.

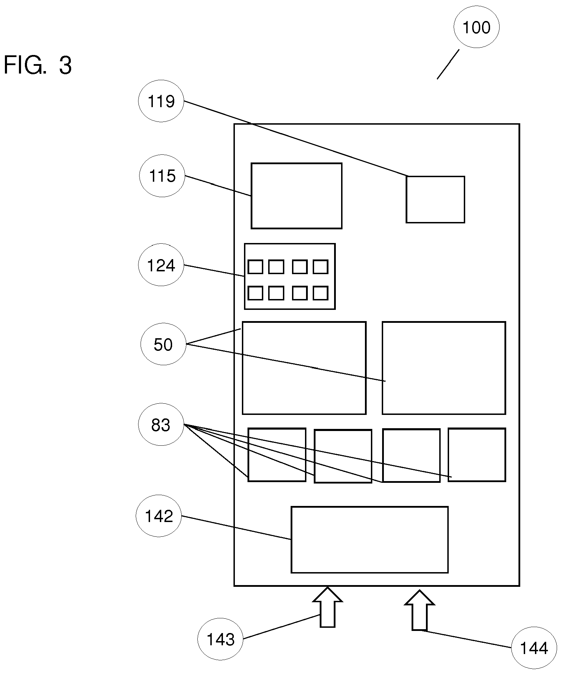

FIG. 3 provides an example of a FIRE-NODE small cell base station 100 according to the invention comprising interface module 142 with incoming power and data connections 143, 144, WiFi modules 50, CBRS (Citizen's Broadband Radio Service) modules 83, Sensor module 115, camera 119, and mm-wave module 124.

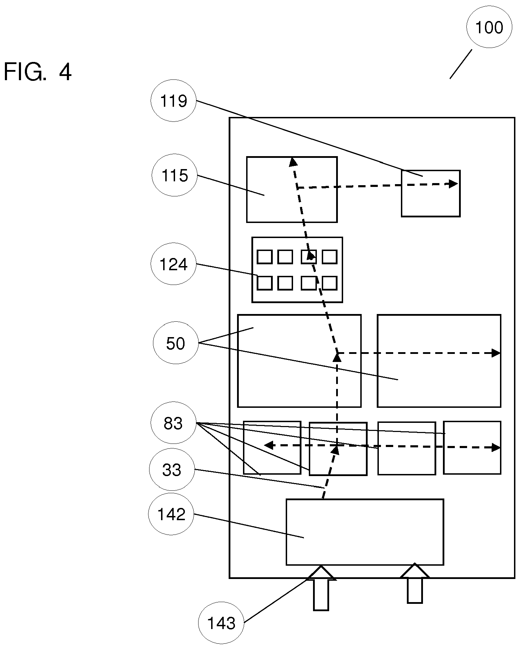

FIG. 4 is a schematic representation of typical require power interconnections in the example of FIG. 3 between the incoming power supply 143, the interface module 142 and functional modules 50, 83, 115, 119, 124. The incoming power 143 can be connected to each module in series, as shown. That is, the functional module 119 can receive power from module 115, which in turn is connected to and receives power from module 124, which in turn is connected to and receives power from module 50, which in turn is connected to and receives power from module 83, which in turn is connected to and receives power from the interface 142. And, each module can be connected to and provide power to subsequent like modules. For example, as shown, one of the functional modules 83 can receive power from the interface 42, and then be connected to and provide power to one or more other functional modules 83 in series.

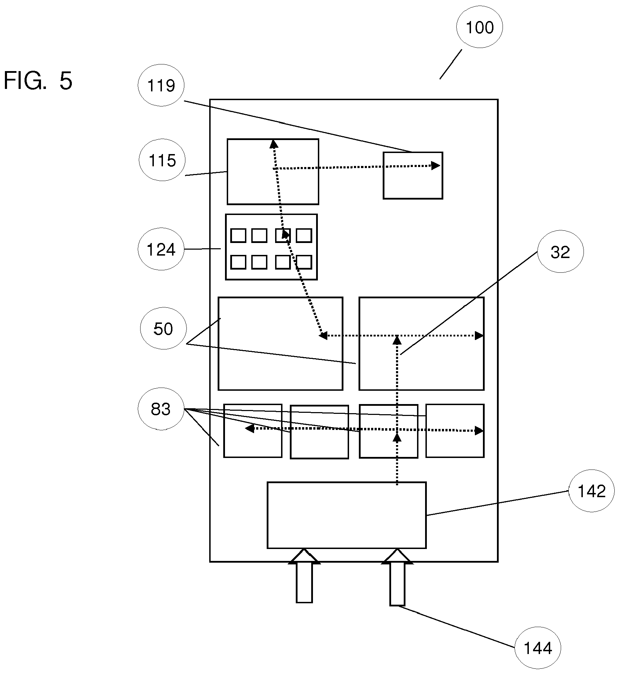

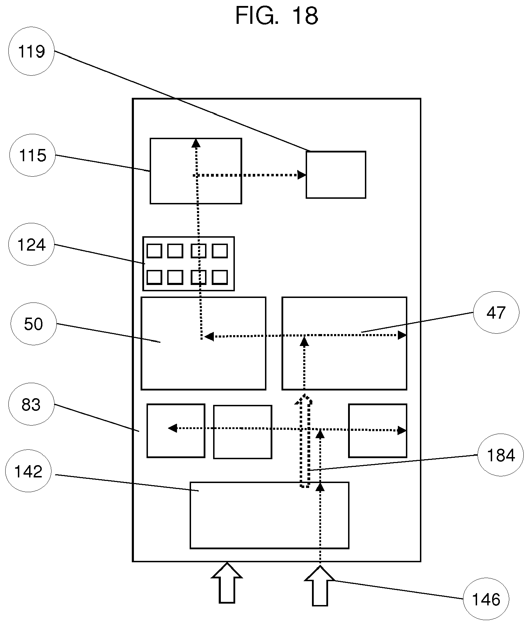

FIG. 5 is a schematic representation of typical required data interconnections in the example of FIG. 3 between the incoming external data line 144, the interface module 142 and functional modules 50, 83, 115, 119, 124. The incoming power 143 can be connected to each module in series, as shown. That is, the functional module 119 can receive data from module 115, which in turn is connected to and receives data from module 124, which in turn is connected to and receives data from module 50, which in turn is connected to and receives data from module 83, which in turn is connected to and receives data from the interface 142. And, each module can be connected to and provide data to subsequent like modules. For example, as shown, one of the functional modules 83 can receive data from the interface 42, and then be connected to and provide data to one or more other functional modules 83 in series. In an alternative embodiment, each module 83, 50, 124, 115, 119 can be directly connected to the incoming data 144 at the interface 142, as shown for example in FIG. 18.

As further illustrated in FIGS. 4-5, the functional modules 83, 50, 124, 115, 119 can be arranged in columns and rows. For example, the figures show functional modules arranged in separate rows, and each row for functional modules 83, 50, 115 and 119 having multiple functional modules 83, 50, 115 and 119 (one row being formed by two different types of functional modules 115, 119. In addition, the figures showing at least one functional module from each row connected to form a column. Accordingly, power and data are passed along the column of functional modules, and then each of those functional modules pass power and data to the functional modules in that corresponding row. In addition, the functional modules can be linearly arranged in the rows and/or columns, or offset.

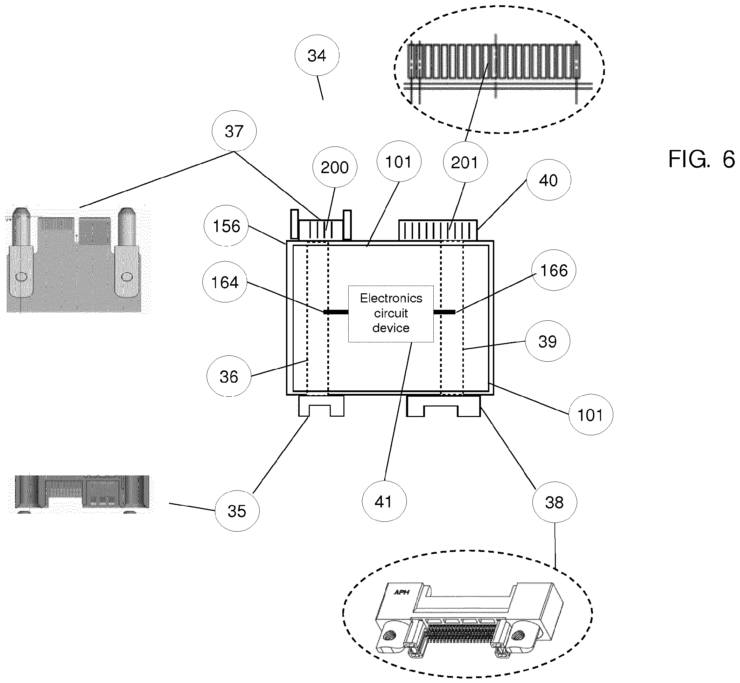

FIG. 6 shows one non-limiting example implementation of a functional module 34. The functional module 34 can be any one of the functional modules 50, 83, 124, 115, 119 of FIG. 4. The functional module 34 has a supporting member, such as a housing or enclosure 156, and a printed circuit board 101. One or more first power connectors 35 are provided for power at a first edge of the PCB 101 and one or more second power connectors 37 are provided for power at a second edge of the PCB 101. As shown in the illustrate non-limiting embodiment, the second edge can be at an opposite side of the PCB 101 and substantially parallel with the first edge. In addition, one or more first data connectors 38 are provided for data at the first edge, and one or more second data connectors 40 are provided for data at the second edge respectively. Accordingly, the data connectors 38, 40 and the data bus 39 are at an opposite side of the housing 156 than the power connectors 35, 37 and power bus 36 to minimize interference of data on the data bus 39.

The power connectors 35, 37 at the first and second edges are galvanically connected by elongate conductive elements forming a power bus 36 and the data connectors at the first and second edges are electronically connected by circuit tracks forming a data bus 39. The data bus 39 may connect connectors 38, 40 by a galvanic connection or by way of an electronic data communications circuit.

The power bus 36 may have at least one of a conductive printed circuit track or elongate solid conductor or a combination of at least one conductive track and at least one solid conductor. Where multiple conductive paths are provided, they may be connected in parallel, for example to increase the current carrying capacity of a single conductive track, or they may form independent current paths, for example to provide more than one supply voltage for connection to the functional module 34 or to other functional modules connected thereto. That is, the interface (in this embodiment and other embodiments) can provide different power outputs, each having a same or different voltage.

In one embodiment, the first power connector 35 can be an input and the second power connector 37 can be an output. And the first data connector 38 can be an input and the second data connector 40 can be an output. The power bus 36 connects the input power connector 35 with the output power connector 37. The data bus 39 connects the input data connector 38 to the output data connector 40 and comprises at least one printed circuit track. The electronics circuit device 41 is galvanically connected to the power bus 36 by conductive element 164 and to the data bus 39 by the conductive element 166. It will be understood that the electronics circuit device may be connected to at least one of the conductors forming the power bus by conductive element 164 and at least one of the conductors forming the data bus by conductive element 166. Conductive elements 164 and 166 may each comprise one or more conductive tracks or wires and may be connected by soldering, by demountable connectors, by insulation displacement connectors or by a combination of these methods.

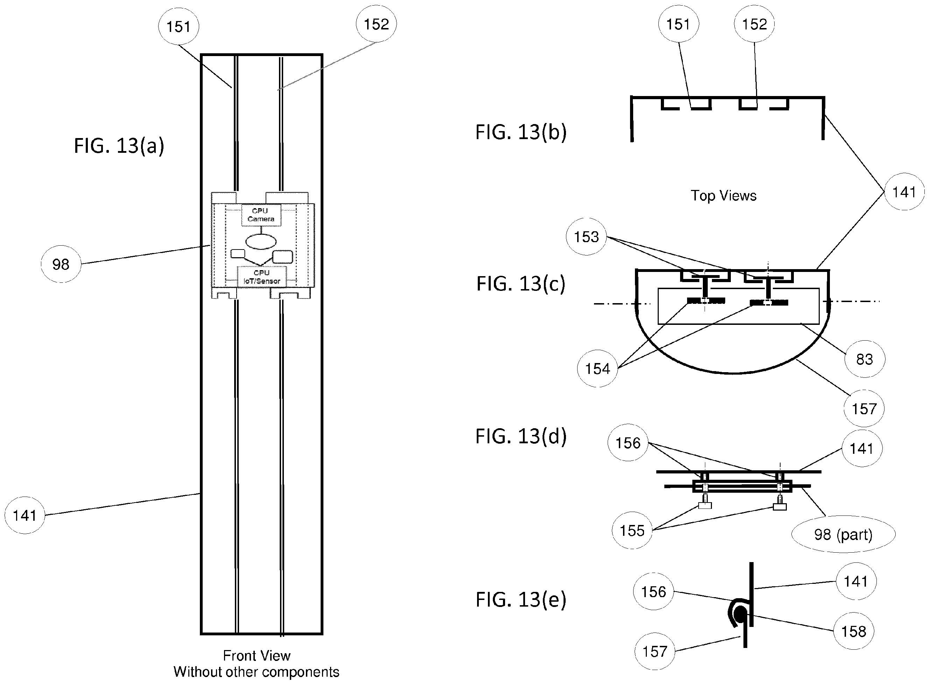

The supporting member 156 may be substantially planar, formed from metal such as aluminum alloy by extrusion or from folded sheet, or by injection molding of a suitable thermoplastic material such as high-impact polystyrene. The supporting member may be provided with attachment locations and attachment features or mechanisms for the printed circuit board 101, the connectors 35, 37, 38, 40, the printed circuit board 101 and the electronics circuit device 41 as well as features providing for its attachment to a chassis member 141 shown on FIGS. 13-17.

The printed circuit board 101 is preferably constructed using multi-layer technology such that in addition to the power and data buses it may physically support and provide power and data connection to at least one electronic circuit device 41 formed thereon or supported thereby such as at least one of a radio unit, sensor, camera or other functional device. The printed circuit board is preferably provided with at least one planar conductive ground plane that acts as a common ground between the power and data buses 36, 39 and the at least one electronics circuit device 41.

The first or input power and data connectors 35, 38 at the first edge of the printed circuit assembly 101 are preferably of female configuration, while the second or output connectors 37, 40 at the second edge are of male configuration. In one embodiment, the connectors are industry-standard printed circuit card edge connectors in which the male contacts are formed by conductive tracks 200, 201 etched on the circuit board 101 and are preferably plated with gold to provide corrosion resistance and low contact resistance. In one embodiment, the printed circuit board 101 is oriented such that the male contacts are on its upper edge and the female connectors are on its lower edge. In one embodiment, the connectors are Amphenol Cool Edge™ connectors for data and Amphenol Cool Edge™ PowerGuide connectors for the power bus.

It will be readily understood that the configuration described permits a plurality of printed circuit boards 101 of the various functional modules 50, 83, 115, 119, 124 (FIG. 4) to be physically linked together and to the interface module 142, such that each board and each supported electronics circuit device 41 is provided with power, and data connections are provided between each of the functional modules and the interface module 142.

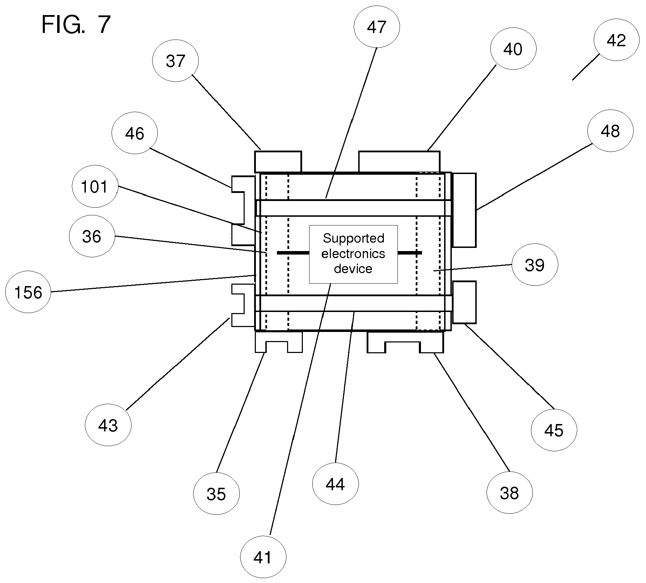

FIG. 7 shows a second implementation of a functional module 42, as shown in FIG. 6, with printed circuit board 101 and supported electronics circuit device 41 additionally provided with a second power bus 44 comprising at least one elongate conductive member oriented substantially orthogonally to the first power bus 36, being galvanically connected to at least one conductive member of the first power bus and being terminated by third and fourth power connectors 43, 45 on a third and fourth edge respectively of the printed circuit board 101. As shown, the third and fourth edges can be at opposite sides of the housing 156, substantially parallel to each other and substantially orthogonal to the first and second edges.

There is also provided a second data bus 47 oriented substantially orthogonally to the first data bus 39, and terminated by third and fourth data connectors 46, 48 on the third and fourth edges respectively of the printed circuit board 101. Conductive members of the second data bus 47 may be connected to those of the first data bus 39 by electronic circuit arrangements. It will be understood that this configuration facilitates additional topologies for the connected functional modules, having physical and electrical connections in both vertical and lateral planes. In one embodiment, the third power and data connectors 43, 46 can form inputs, and the fourth power and data connectors 45, 48 can form outputs.

A fully configured FIRE-NODE small base station may comprise base modules having the configuration of FIG. 6 and/or having the configuration of FIG. 7.

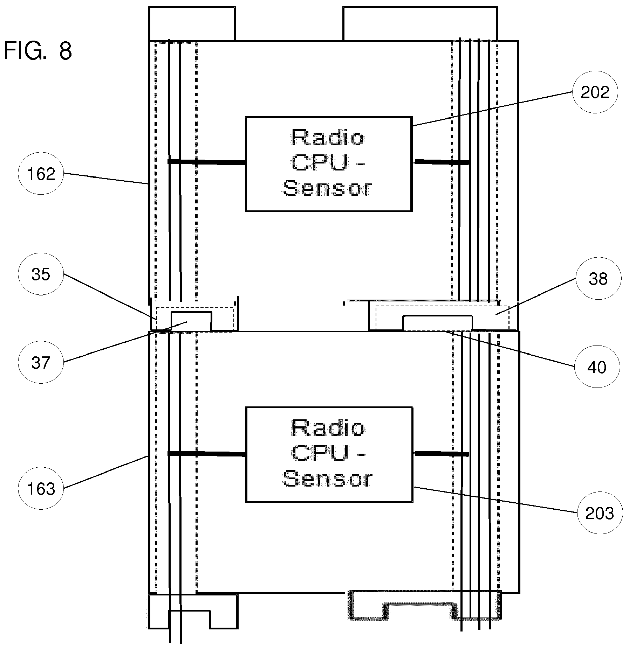

FIG. 8 shows first and second functional modules 162, 163 supporting first and second electronics circuit devices 202, 203 respectively with connectors 37, 40 at a first end of the first module 162, fully engaged with connectors 35, 38 at the proximate end of the second module 162. Thus, the male power connector 37 of the second functional module 163 is received by and engaged with the female power connector 35 of the first functional module 162. This electrically connects the power bus 33 of the second functional module 163 with the power bus of the first functional module 162. In addition, referring to FIG. 4, the female connector 35 of the second functional module 163 can receive a male connector of the interface 142, so that the power bus 33 of the second functional module 163 is electrically connected with the input power source 143 via the interface 142 (that is, the AC power source is connected to at least one high voltage input at the interface 143 and the power bus 33 is connected to at least one conditioned low voltage DC output from the interface 143), and the power bus 33 of the first functional module 162 is electrically connected with the power source 143 via the interface 142 and the second functional module 163. Thus, power is supplied from the power bus 33 to the sensor 202 of the first module 162, and power is also available from the power bus 33 to the sensor 203 of the second module 163. And, power is available at the male output connector 37 of the first module 162, so that another module can be connected thereto.

In addition, the male data connector 40 of the second functional module 163 is received by and engaged with the female data connector 38 of the first functional module 162. This electrically connects the data bus 32 of the second functional module 163 with the data bus of the first functional module 162. In addition, referring to FIG. 5, the female data connector 38 of the second functional module 163 can receive a male data connector of the interface 142, so that the data bus 32 of the second functional module 163 is electrically connected with the input data 144 via the interface 142, and the data bus 32 of the first functional module 162 is electrically connected with the input data 144 via the interface 142 and the second functional module 163. Thus, data is supplied from the data bus to the sensor 202 of the first module 162, and data is also available from the data bus to the sensor 203 of the second module 163. And, data is available at the male output connector 40 of the first module 162, so that another module can be connected thereto. Accordingly, the sensors 202 of the first and second modules 162, 163 can communicate with one another and with other data processing components at other modules in the system 100.

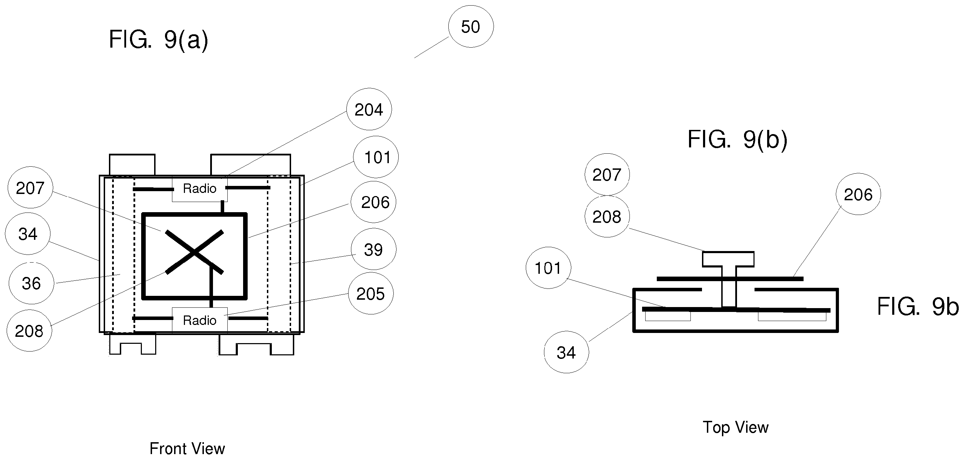

The functional modules can have any suitable electronic components that are connected to the power bus and the data bus. FIGS. 9(a), (b) are diagrammatic representations of an example of a functional module 50 enabling WiFi connectivity of a small base station constructed according to the invention. The module 50 has a base module 34 as shown in FIG. 6 supporting radio transmission and reception circuits 204, 205 operative on the assigned 2.4-GHz and 5-GHz WiFi frequency bands respectively and operatively connected to the power bus 36, the data bus 39 and to an antenna assembly. The antenna assembly can, for example, include crossed dipoles 207, 208 operative in the 5-GHz frequency band positioned substantially parallel with a patch antenna 206 operative in the 2.4-GHz frequency band.

It will be seen that the arrangement of FIG. 9(a), installed in a small base station 100 according to the invention, forms a fully functional WiFi base station, providing service for users in an area proximate to the small base station 100 connected to the public fixed network. In one embodiment of the invention, the data communicated between the WiFi module 50 and users in the served area may be connected to the public fixed network by way of a second wireless network, for example a 4G or 5G wireless network by the use of a 4G or 5G functional module within the same small cell 1 00 connected to an extension of the data bus 39 by way of the configuration provided by the invention. Referring to FIG. 9(b), an opening is provided in the front of the housing through which 206, 207, 208 extend to the exterior. The power bus 36 and data bus 39 can independently be on either face of the PCB 101, and need not be on the same face on each module provided that the connectors are correctly aligned and configured. The antenna 206 is between the dipoles 207, 208 and the front of the housing 34. Circuit 205 can be positioned on either face of the PCB 101.

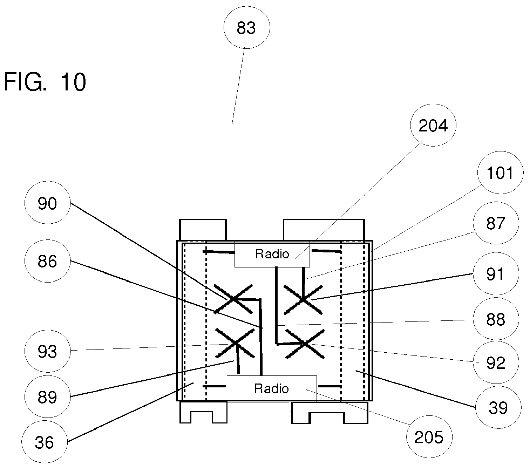

FIG. 10 is a diagrammatic representation of a further example of a functional module 83 supporting connectivity to a small base station constructed according to the invention and comprising a base module 34 as shown in FIG. 6. Radio transmission and reception circuits 204, 205 operative on the 3.5-GHz frequency band assigned in the United Stated to the Citizens' Broadband Radio Service (CBRS) are each operatively connected to the power bus 36, the data bus 39 and by radio frequency transmission lines 86, 87, 88, 89 to antennas having, by way of example, crossed dipoles 90, 91, 92, 93.

It will be seen that the arrangement of FIG. 10, installed in a small base station 100 according to the invention, forms a fully functional CBRS base station, providing service for users in an area proximate to the small base station 100 connected to the public fixed network. In one embodiment, the data communicated between the CBRS module 83 and users in the served area may be connected to the public fixed network by way of a second wireless network, for example a 4G or 5G wireless network by the use of a 4G or 5G wireless module within the same small cell 100 connected to an extension of the data bus 39 by way of the configuration provided by the invention.

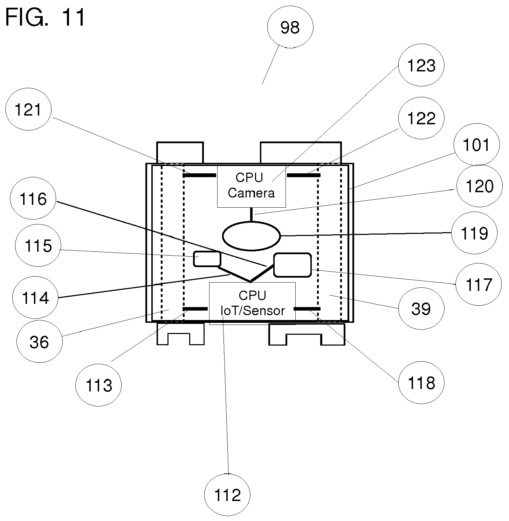

FIG. 11 is a diagrammatic representation of an example of a functional module 98 supporting environmental sensors 115, 117 and camera 119 and, together with associated electronic circuits 112, 123 to provide control, data management, processing and storage. Power and data connectivity are provided to the camera 119 by conductive members 121, 122 and to the environmental sensors 115, 117 by conductive members 113, 118 respectively. By way of example the camera may provide traffic monitoring or security functions, while the environmental monitors may provide data on air quality or noise levels.

It will be understood that the arrangement of FIG. 11, installed in a small base station 100 according to the invention, forms a fully functional environmental monitoring station connected to the public fixed network. In one embodiment, the data communicated between the environmental module 98 and associated remote data processing resources may be provided by way of a wireless network, for example a WiFi, 4G or 5G wireless network, by the use of a WiFi, 4G or 5G wireless functional module within the same small cell 100 connected to an extension of the data bus 39 by way of the configuration provided by the invention.

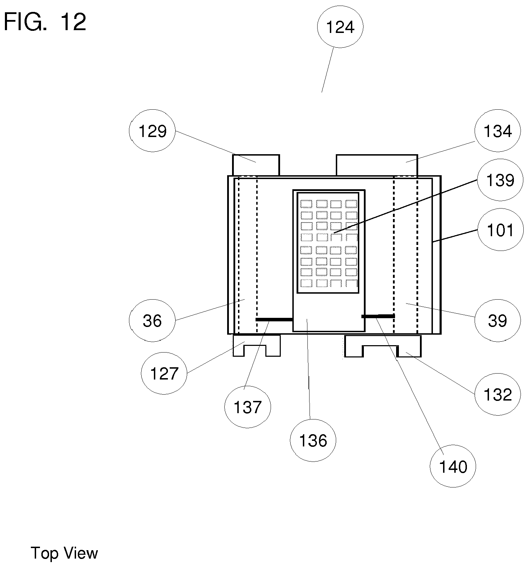

FIG. 12 is a diagrammatic representation of an example of a functional module 124 enabling 5G New Radio (5GNR) connectivity to a small base station constructed according to the invention. The module 124 has a base module 34 as shown in FIG. 6 supporting radio transmission and reception circuits 136 operative on the assigned millimeter-wave bands and operatively connected to the power bus 36, the data bus 39 and an integrated antenna array 139.

The 5G-NR radio module installed in a small base station 100 according to the invention may provide data services to proximate users, a link providing connectivity between a WiFi access point and the public fixed network or a link to other base stations.

FIG. 13(a) shows an exemplary functional module 98 mounted on a rigid elongate structural support member 141, which may be formed from aluminum by an extrusion process. As shown in FIG. 13(b) and FIG. 13(c) the support member 141 may be provided with longitudinal re-entrant features forming respective channels 151, 152 having openings suitable for the insertion of headed screws 153 (for example "T-screws" or "T-bolts") whose threaded end projects outwardly from the member 141. The channels 151, 152 extend outward along the front surface of the support 141, as best shown in FIG. 13(b).

The channels 151, 152 have two side walls and inwardly-facing arms substantially orthogonal to the side walls that come together to form the central opening that receives the neck of the screw. However, the opening is narrower than the head of the screw, so that the screw does not come free of the channel. The screw is inserted into and removed from the channel at openings in the channel at the distal top and bottom ends of the support 141, or at widened openings provided at other locations along the length of the channels 151. 152. The elongate channels 151, 152 are formed at the top planar surface of the support 141 and extend along the longitudinal length of the member 141 substantially parallel to each other and the sides of the member 141. The channels 151, 152 slidably receive the screw 153 heads, while only permitting the threaded body to protrude through the opening. Of course, any suitable configuration can be provided to removably couple the modules 98 with the support 141, other than the use of channels, such as fasteners or the like.

One or more functional modules such as 83, 98 provided with corresponding mounting holes may be fixedly attached to the member 141 by means of nuts 154 engaged on the T-bolts 153. The screws 153 slide within the channels 151, 152 so that the respective connectors of the modules 83, 98 align with one another and can engage and disengage one another. Once connected, the modules can be locked to one another to provide a reliable connection and avoid inadvertent disconnection. An alternative implementation using headed nuts (for example "T-nuts") and corresponding standard set screws is also possible and is shown in FIG. 13(c).

A further implementation is shown in FIG. 13(d) in which retaining screws 155 engage in slots between projecting ridges 156 formed in an extruded support member 141.

It may be seen that while the lateral dimension of each functional module contained within a small base station according to the present invention must be sufficient to support the bus connectors at a standard spacing common to all installed functional modules, the longitudinal dimension of any module, being the height of such modules as installed in the structural member 141, is not constrained, so modules having different functionality may be dimensioned to provide the appropriate area for the circuit components and antennas required to perform each specific function.

Weather protection for the contents of the small base station may be provided by a radome 157 formed from material with a low dielectric loss such as polystyrene or glass-reinforced polyester resin (Fiberglass), which allows signals to pass without interference. The radome may be secured to the structural member by means of screws or rivets or by a feature 158 formed in an extruded radome 157 and a corresponding groove 156 formed in the proximate edges of the support member 141 such as shown in FIG. 13(e). The radome may have covers provided at its upper and lower ends to exclude water and insects.

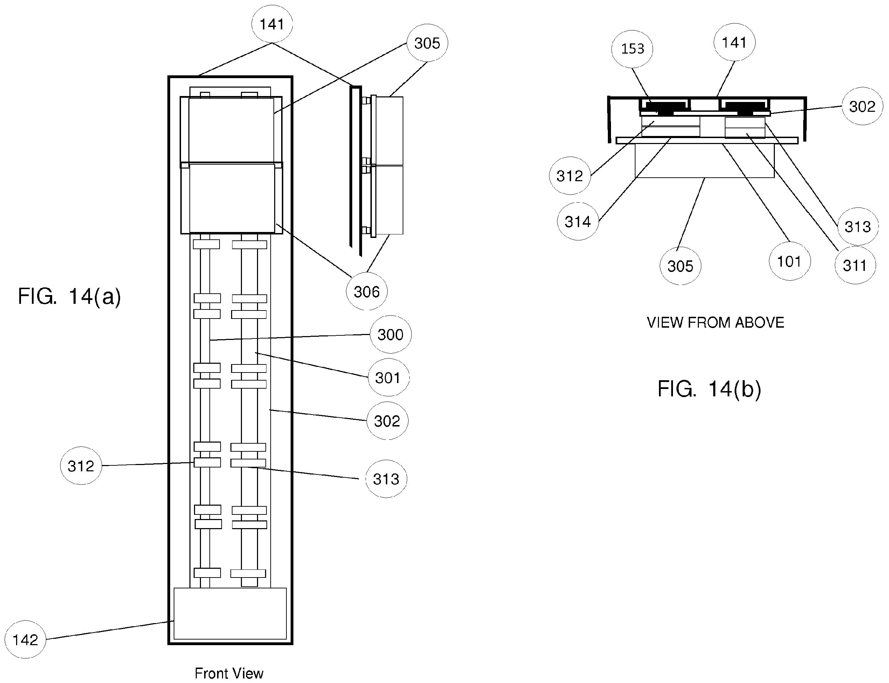

FIGS. 14(a), (b) show a further implementation of the invention in which a rigid elongate structural support member 141 supports an elongate planar circuit board 302 having at least one elongate conducting element 300 formed thereon comprise a power bus and at least one further elongate conducting element 301 formed thereon to comprise a data bus 301. The power bus 300 and data bus 301 are connected to multipole connectors 312, 313 having outwardly facing interfaces and engaging with corresponding outwardly facing multipole connector interfaces provided on the proximate faces of the functional modules.

A functional module 305 is formed on the printed circuit board 101 and has a module power connector 314 and module data connector 311 that removably engage with the mating power connector 312 and data support connector 313 mounted on the elongate printed circuit board 300, 301, respectively. In this way connector pairs 312, 314 and 311, 313 provide mechanical support for functional module 305 as well as providing it with electrical connections to the power bus 300 and data bus 301. The module connectors 314, 311 attached to the functional modules are preferably of male format and the connectors 312, 313 on the printed circuit board 302 secured to the support member 141 are preferably of female format.

Accordingly, the power bus connectors 312 are attached to the power bus 300 at various fixed locations along the length of the power bus 300. And, the data bus connectors 313 are attached to the data bus 301 at various fixed locations along the length of the data bus 301 in alignment with the power bus connector 312. In addition, a first power bus connector 312 and a first data bus connector 313 are each positioned on the support 141 at a location corresponding to a top end of the functional module 305, and a second power bus connector 312 and a data bus connector 313 are each positioned at a location along the support 141 corresponding to a bottom end of the functional module 305. The first power bus and data bus connectors 312, 313 align with and connect to respective multi-pole power and data module connectors 314, 311 positioned toward the top end of the module 305, and the second power and data bus connectors 312, 313 align with and connect to respective multi-pole power and data module connectors 314, 311 positioned toward the bottom end of the module 305.

Thus, as shown in FIGS. 14(a), (b), the elongate printed circuit board 302 is supported by the elongate supporting member 141. The PCB 302 extends lengthwise along the support 141 and is coupled to the support 141 by screws 153 that are situated in channels on the support 141. The screws 153 can slideably engage the channels and can be placed at a desired position and locked at that position such as by a fastener or the like, though other means can be utilized to attach the PCB 302 to the support 141.

And, at least one conductive member or data bus 301 and at least one conductive member or power bus 300 are supported by the printed circuit board 300. The power and data connectors 312, 313 are provided on a front face of the printed circuit board 300. The module power and data connectors 314, 311 are provided on a rear face of functional module 305 and removably connect with the power and data connectors 312, 313, respectively. Antennas, cameras or other functional devices are provided on a front face of the module.

In this manner, power is provided from the power bus 300, through the top and bottom power connectors 312, the module power connectors 314, to the power bus internal to the module 305 where it provides power to all internal components. The very bottom connector 312 is connected to the interface 142, and the very top connector 312 can be a female connector that connects with other base stations. Data is provided from the data bus 301, through the top and bottom support data bus connectors 313, the module data connectors 311, to the data bus internal to the module 305 where it provides data to all internal elements.

In one aspect of the invention the power and data bus conductors may be formed by a multi-conductor cable such as a so-called "ribbon cable" and the connectors may be standard insulation displacement connectors. In one implementation of the data bus the multi-conductor cable may extend along substantially the whole length of the structural support member 141 and each functional module may be provided with a single data connector such that the connections to all installed modules appear in parallel across the data bus.

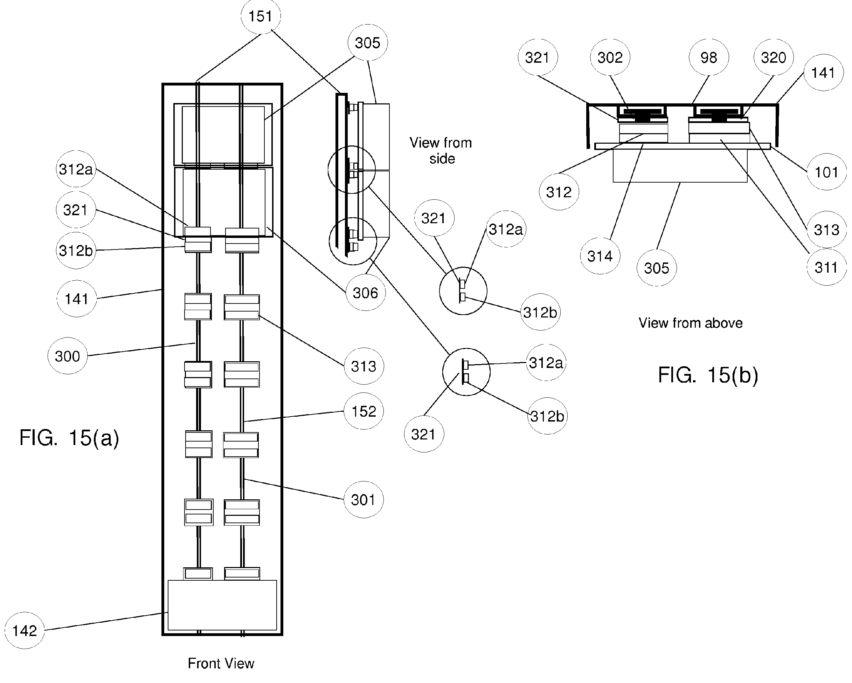

FIGS. 15(a), (b) show a further implementation in which the module power and data conductors 314, 311 are provided on each functional module 305 such as the one shown in FIG. 6, that connect with power and data conductors 312, 313 coupled with the power and data buses 300, 301. The module power conductors 314 are terminated by printed circuit headers of male configuration projecting outwardly from the rear face of the module printed circuit board 101. The module power conductors 314 connect with an internal module power bus, and engage with a corresponding support connector 312 of female configuration mounted on a support printed circuit board 321. The module data conductors 311 are terminated by printed circuit headers of a male configuration projecting outwardly from the rear face of the module printed circuit board 101. The module data conductors 311 connect with an internal module data bus, and engage with a corresponding support data connector 313 of female configuration mounted on a support printed circuit board 320.

To enable the interconnection of the power bus between modules there are provided at least two link modules each comprising two header connectors, namely upper power connector 312a and lower power connector 312b, of female format mounted on a printed circuit board 321 and projecting outwardly therefrom on a first face. Each of the connectors 312a, 312b have the same number of pins as the corresponding power bus connector 314 on the functional module. Each pin of the first or upper connector 312a is linked by a conductive track to the corresponding pin of the second or lower connector 312b.

In like manner to enable the interconnection of the data bus 301 between modules there are provided at least two link modules each having two header connectors of female format, namely first or upper data connector 313a and second or lower data connector 313b, mounted on a printed circuit board 320 and projecting outwardly therefrom on a first face. Each of the connectors 313a, 313b have the same number of pins as the corresponding data bus connector 311 on the functional module 305. Each pin of the first connector 313a is linked by a conductive track to the corresponding pin of the second connector 315b.

It may be convenient to configure a single printed circuit board to support two power bus female connectors 312a, 312b and two data bus female connectors 313a, 313b together with tracks formed thereon to galvanically connect the corresponding pins of power bus connectors 312a, 312b and of data bus connectors 313a, 313b.

It will be understood that the arrangement of FIG. 15 provides the same connectivity of the power and data buses between modules as the arrangement in FIG. 13 but allows for the insertion and removal of any module without any necessity of first removing other modules. In FIG. 13, the modules plug into one another. To remove any module you have to mechanically release the modules above it to disengage the bus connectors, but there modules may have unequal lengths. In FIG. 14 you can pull out and replace any module provided they have a common length.

To summarize, in FIG. 13, the support 141 provides a mechanical alignment and connection mechanism and does not contain any electronics, which are all provided by the various modules 98. The modules 98 directly connect to one another, whereby the power and data bus of each module 98 connects with the power and data bus of each adjacent connected module 98.

In FIG. 14, the support 141 support a power bus 300 and data bus 301 together with power and data connectors 312, 313 that connect with the modules 305, and the modules 305 via module power and data connectors 314, 311. Power and data connectors 311, 314 are provided on a rear face of functional module 305 and antennas, cameras or other functional devices are provided on a front face of the module. The modules 305 do not directly connect with each other, but instead are mechanically connected directly to the support 141 and are electrically connected directly to the power and data buses 300, 301. Thus, the modules 305 are electrically coupled together via the power bus 300 and the data bus 301.

FIG. 15 is similar to FIG. 13 in that the support 141 does not have a power and data bus. However, the modules 305 do not directly connect to each other mechanically, but instead are coupled to the support 141. And the modules 305 do not directly connect to each other electronically, but via the power connectors 312, 314 and data connectors 313, 311 positioned between the functional modules 305. One functional module 305 connects to one power and data connector 312a, 313a on the link module, and the adjacent functional module 305 connects to the other power and data connector 312b, 313b on the link module. So the internal power and data buses of module 305 connect via the module power and data connectors 314, 311 and the power and data connectors 312, 313 to the common power and data buses 300, 301.

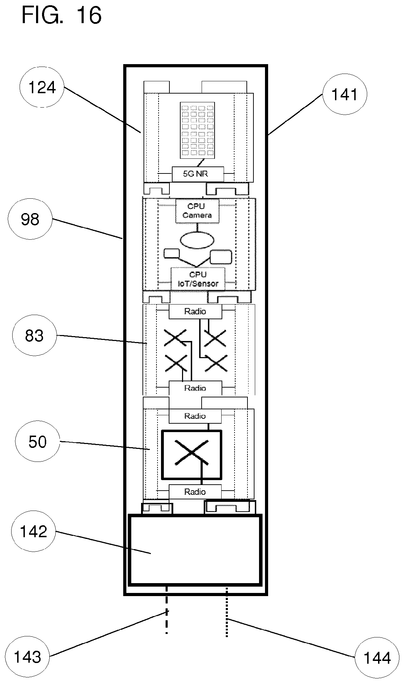

The support 141 can be utilized to mechanically and electrically couple various functional modules. FIG. 16 shows an example to demonstrate the flexibility of the configuration of a small cell base station according to the invention, comprising an elongate structural support member 141 supporting an interface module 142, a WiFi module 50, a CBRS module 83, a sensor module 98 and a 5G-NR module 124.

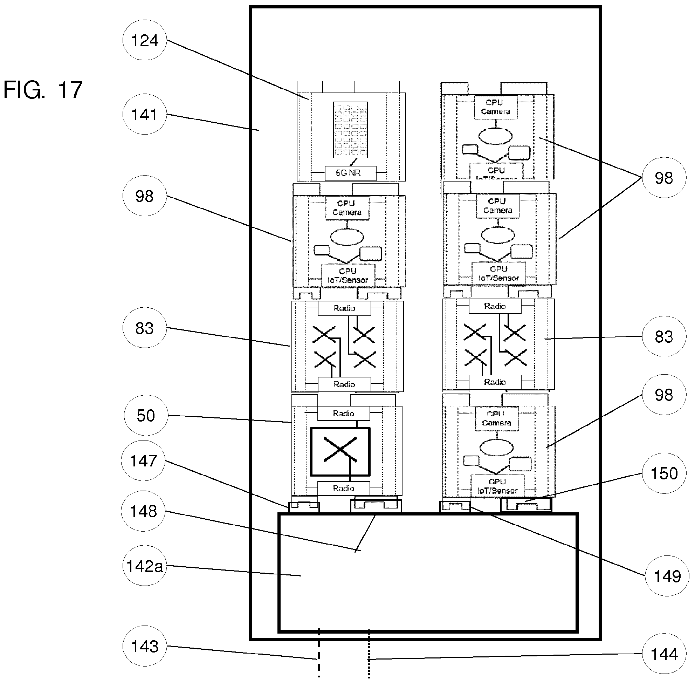

FIG. 17 shows a further configuration of a small cell base station according to the invention in which an extended interface module 142a provides two power bus connections and two data bus connections, enabling a configuration comprising two columns of interconnected functional modules. The columns can be physically substantially parallel to one another, as shown, though other configurations are suitable.

It will be understood that any combination of functional modules may be configured in the exemplary arrangements shown in FIGS. 16 and 17, each functional module being provided with power from the power bus and data connectivity by the data bus.

FIG. 18 shows an arrangement in which an optical fiber connection is made to both to the interface module 142 and also to at least one functional module, for example module 47 contained within a FIRE-NODE small cell base station. Such a directly connected module may also be connected to the internal FIRE-NODE data bus and other modules may be connected to the internal bus. The interface module may include an optical multiplexer arrangement wherein a single external optical data connection may provide optical connections to multiple functional modules. In a limiting case the data connection to all functional modules may be optical.

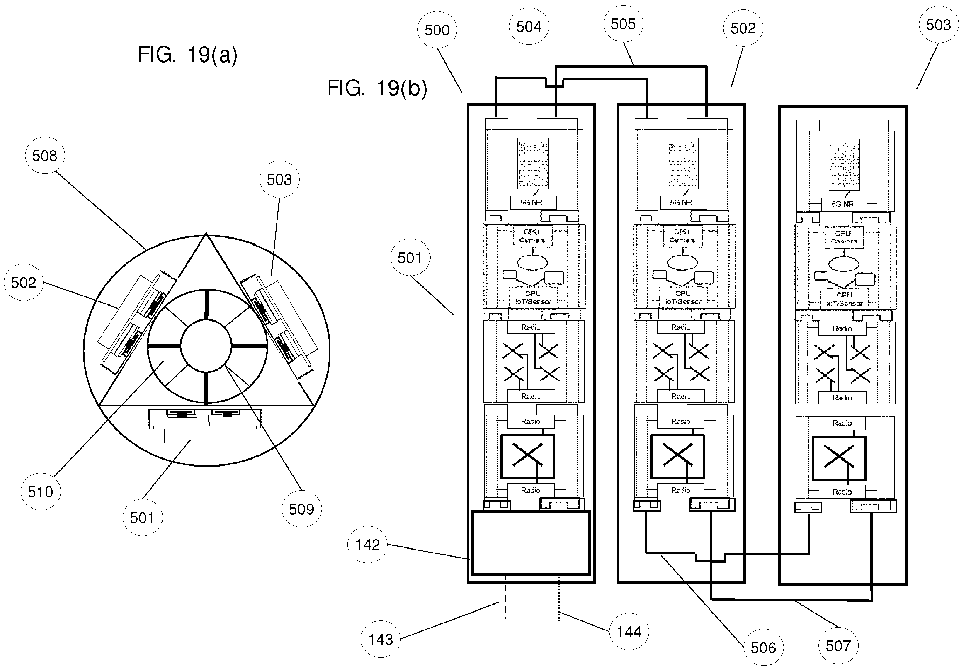

FIGS. 19(a) and 19(b) show an example of the complete structure of FIG. 16 but using multiple (here three) assemblies 501, 502, 503 arranged in a triangular configuration supported by an elongate central vertical structural member 509 and housed within a cylindrical protective housing or radome 508. The radome 508 can fully surround and enclose the assemblies 501, 502, 503 and the vertical structure 509.

The assemblies 501, 502, 503 can each be mounted to a flat planar panel that are joined together to form the triangular configuration. The central structure 509 is optional, but can be positioned at the center of the triangle and can be circular and contact the panels to further support the triangular structure. The vertical structure 509 can also have a center circular structure and outwardly extending arms extending between the inner center and the outer circular structures to further strengthen the structure 509 and provide extended cooling surfaces for the attached functional modules.

The assemblies 501, 502, 503 may be operated as three independent base stations each providing service in a separate sectoral coverage area or may cooperate to provide a quasi-omnidirectional configuration in which the same transmissions are made from functional modules on each face and are synchronous and co-phased. According to operational requirements the functional modules for some services, for example WiFi transmissions on the 2.4-GHz frequency band may be operated in a quasi-omnidirectional mode, while other modules, for example modules providing for 5GNR services may operate independently on each face of the assembly.

In FIG. 19(b) it is seen that an assembly 500 contains an interface module 142 connected to external power line 143 and data communications line 144. The assembly 501 is connected to the power bus of assembly 500 by means of a connecting line 504 and to the data bus of the assembly 500 data bus by means of the line 505. In a similar manner the power and data buses of assembly 502 are connected to those of assembly 501 by means of the connecting lines 506, 507. Thus, there is a single interface 143 for all of the assemblies 501, 502, 503. The input power 143 and input data 144 are received at the interface 142, then passed via respective connectors to the first (bottommost in the embodiment shown) functional module and each subsequent connected adjacent functional module in the first assembly 501. The lines 504, 505 transfer the power and data from the connectors at the output of the last (topmost in the embodiment shown) functional module of the first assembly 501 to the connectors at the input of the first (topmost in the embodiment shown) functional module. The power and data are transmitted from one functional module to the next via their respective power and data buses, to the last (bottommost) functional module. The lines 506, 507 connect the power and data from the output connectors of last functional module of the second assembly 502 to the input connectors at the first (bottommost) functional module of the third assembly 503. Power and data are then provided to the subsequent connected functional modules. Accordingly, power and data are provided for all of the functional modules of the first, second and third assemblies 501, 502, 503, and their respective internal components.

Of course, any suitable number of assemblies 501, 502, 503 and functional modules can be provided, more or less than the three shown. And the assemblies can be arranged in other shapes or configurations.

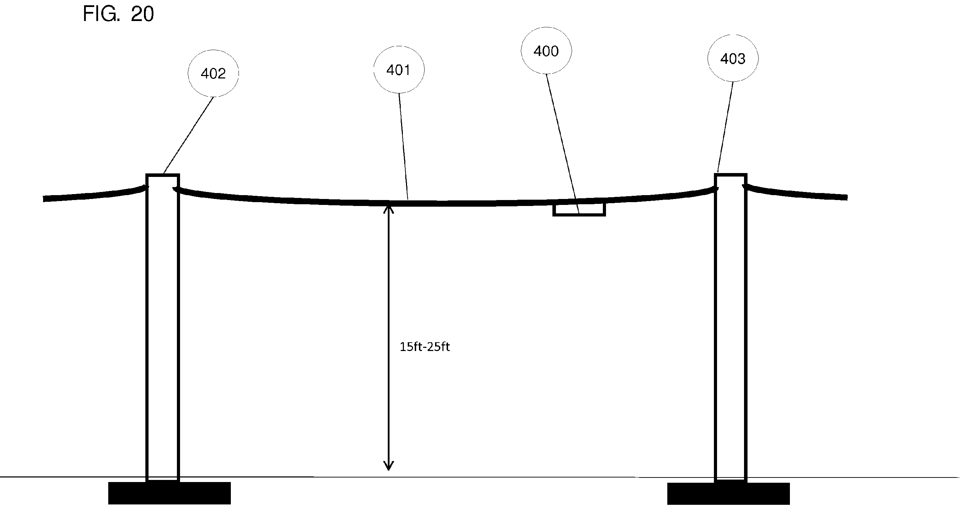

FIG. 20 shows an example of a FIRE-NODE base station 400 suspended from a catenary wire 401 in which the longitudinal axis of the FIRE-NODE 400 is aligned to be substantially parallel with the catenary wire. A utility catenary wire 400 is typically supported at a height between 15 and 25 feet above ground level by means of concrete, metal or wooden utility poles 402, 403. In this configuration the base station is designated SLiM FIRENODE. The base station 400 can be functionally similar to FIG. 16, but configured to be arranged horizontally rather than vertically.

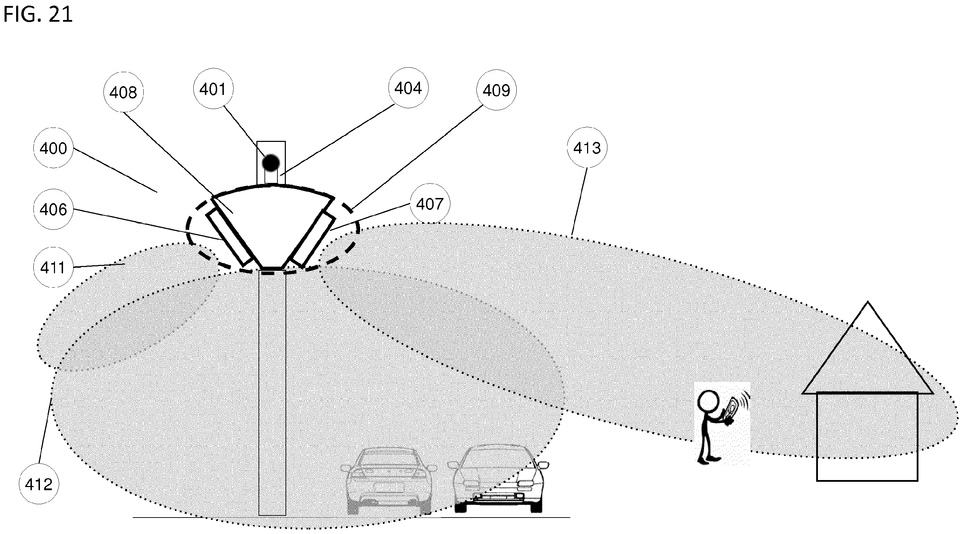

FIG. 21 is an axial view along the line of a catenary wire 401 showing the end view of a strand-mounted FIRE-NODE small base station 400 comprising two linear arrangements of interconnected functional modules 406, 407, each substantially as shown in FIG. 16, arranged in an elongate housing 408 attached to the catenary 401 by means of mechanical linkages 404 and protected by a dielectric cover (radome) 409. The housing 408 provides for the attachment of an interface module and at least one functional module by means of arrangements similar to those shown in FIG. 13. The radome 409 may enclose all the structural and functional elements of the FIRE-NODE or may cover only the functional modules and be engaged with the housing as shown in FIG. 13(e) or otherwise.

It will be seen in FIG. 21 that the faces of the functional modules 406, 407 are aligned such that the radiation patterns 411, 412, 413 formed by the antennas on the faces have their direction of maximum radiation below the horizontal. This ensures that the maximum signal level is provided to nearby users and also reduces the level of signal radiated in a horizontal direction, thus minimizing interference between neighboring base stations.

As indicated diagrammatically, the shape and direction of beams 411, 412, 413 formed by functional modules supporting different radio technologies may differ by design. In some embodiments their shape and direction may be remotely controllable by means of control signals sent to the FIRE-NODE.

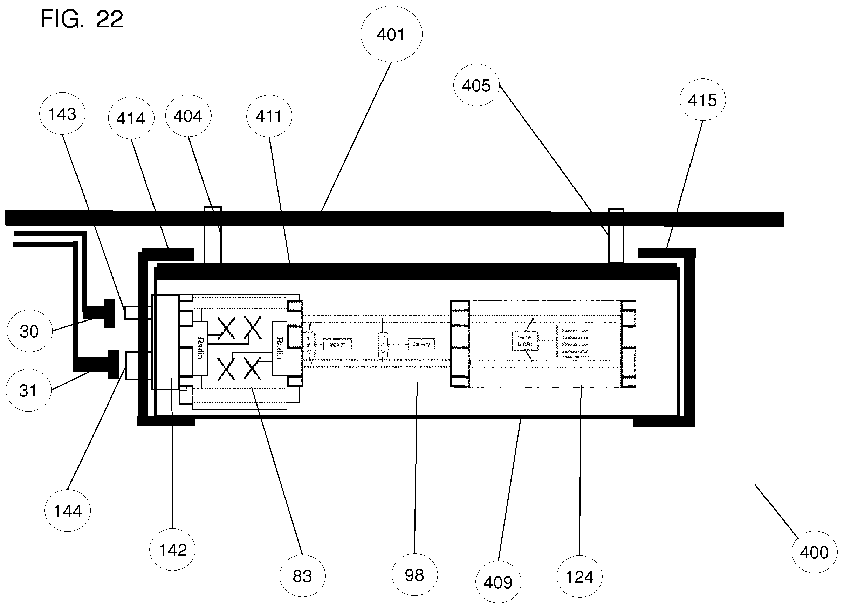

FIG. 22 is a lateral view of a SLiM FIRE-NODE small base station showing a housing 411, suspension linkages 404, 405 and radome 409. It will be seen that for this application the interface module 142 and the functional modules 83, 98, 124 are interconnected to form a horizontal row of modules in contrast to the vertical column of modules used in the example embodiments illustrated in the earlier figures. The power interface 143 and the data interface 144 may be provided on an end face of the assembly and one interface module may provide power and data communications to power and data buses, serving more than one row of functional modules. The infrastructure power supply 30 and data communications 31 may be provided from a connection point on an adjacent utility pole or may be provided directly by power and data connection services supported by catenary 401.

It will be seen in FIG. 22 that the housing may comprise at least one elongate structural member 411, radome 409 and end covers 414, 415, the whole forming a substantially weatherproof assembly, supporting and protecting the enclosed modules. The end cover 415 can be removably or permanently attached to one end of the housing 411. The end cover 414 can be removably attached to an open end of the housing 411 to permit the base station to be inserted and removed within the housing 411. The power and data connectors 143, 144 can extend through openings in the end cover 414 to attach to the respective power supply 30 and data communications 31. One or more suspension linkages 404, 405 have one end connected to the catenary 401 and an opposite end connected to the housing 411. Of course, other suitable connectors or fasteners can be used to connect the housing 411 to the catenary 401.

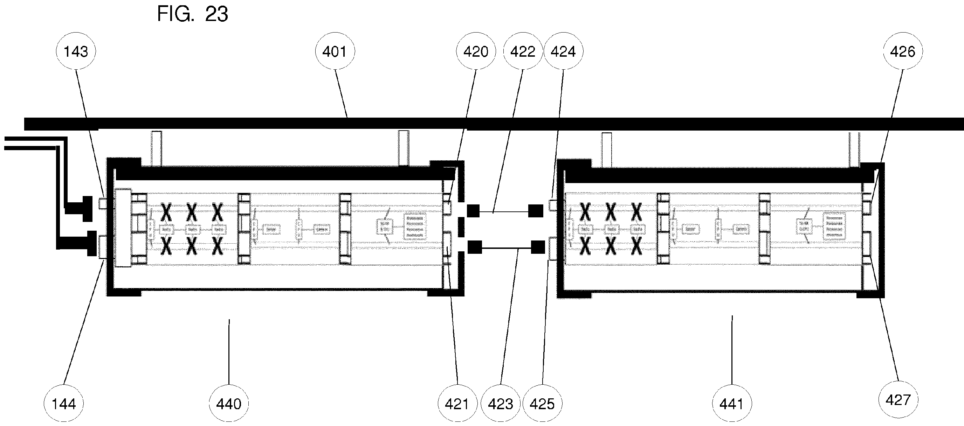

FIG. 23 illustrates a further implementation of the invention in which a SLiM FIRE-NODE low power base station 440 is provided with external power and data bus connections 143, 144 at a first end and corresponding further connections 420, 421 at a second end. Interconnection cables 422, 423 enable the connection of at least one further group of functional modules 441 having power and data input connectors 424, 425 without the necessity of providing a further interface module. Thus, the end cover 415 can have openings with weatherproof seals or removably pugs that permit the cables 422, 423 to connect with the connectors 420, 421 via the openings. Optionally the group of modules 441 may be provided with connectors 426, 427 enabling the connection of at least one further group of functional modules. It will be understood that the spacing between such modules may be small, for example when providing additional services to the same area, or may be substantial, allowing each group of modules to serve further areas, for example different buildings or street blocks.

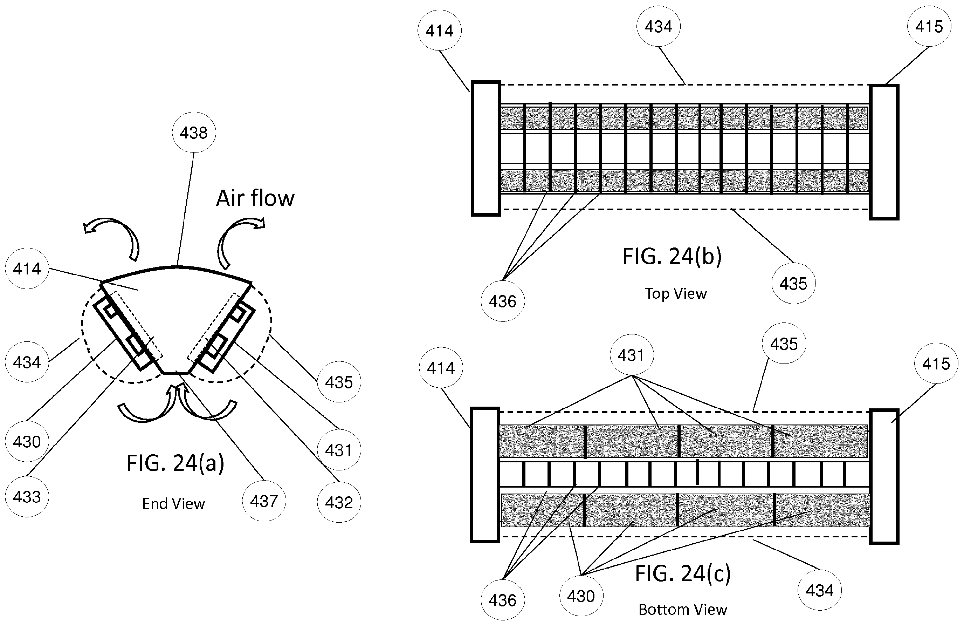

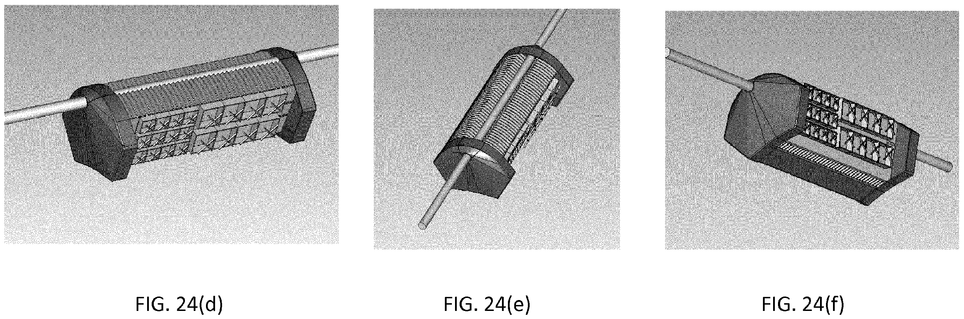

FIGS. 24(a)-(f) show an implementation of a SLiM FIRE-NODE small base station provided with heat sink arrangements to dissipate internally generated heat. This allows the use of higher powers to be supported by the functional modules and may be necessary even for lower module powers in some climatic conditions. The functional modules 430, 431 are supported by elongate structural members 432, 433 and are protected by radomes 434, 435. Substantially parallel planar members 436, such as cooling fins, extending between the proximate faces of structural members 432, 433 provide cooling surfaces. The upper surface 437 and the lower surface 438 of the assembly are open and allow the free passage of air between the cooling surfaces 436. The surfaces 437, 438 can be completely open and cooling fins 436 join the functional modules 432, 433. The cooling surfaces 436 and the structural support members 432, 433 are preferably made from thermally conductive material such as aluminum and are joined together such that heat is readily conducted between them.

As best shown in FIG. 24(c), two rows of functional modules 430, 431 are respectively interconnected, and one end of one of the modules 430, 431 can have an interface. The rows 430, 431 are separated by a distance and define a space therebetween. The cooling device has a frame formed by elongated members that extend the length of the functional modules 430, 431 and are positioned to the outside of the functional modules 430, 431. The cooling fins 436 are substantially thin planar plates that form cross-members which extend between the elongated frame members transversely across the functional members 430, 431. As shown in FIGS. 24(d)-(f) with the cover removed, the fins extend between the support elements for the rows of functional modules. The fins are similar in shape to the cover, but slightly smaller. And the fins are formed around the cable that extends through the housing. The cooling device can have a base or side structure plate that abuts the functional modules and pulls heat from it, and the fins are connected to the plate to dissipate heat from the functional modules through the fins.

It will be understood that the examples of functional modules in FIGS. 6-13 demonstrate the independence of the technologies employed in the functional modules that may be combined in a single small cell base station according to the invention. In some implementations the infrastructure data connection to the device may be provided by a wireless connection (for example 4G or 5G) supported by at least one of the installed functional modules.

It will be understood that in order to provide for data communications at a higher rate than can be supported on a data bus employing conductive connections, for example Ethernet, it is possible to provide optical connectors by providing at least one optical fiber output from the interface unit 142 and an optical fiber connector on at least one functional module.

It is noted that the base stations and functional modules have been described as utilizing both power and data. However, the functional modules need not require both, and the base stations and/or functional modules can have only power or data. In addition, the functional modules are separate and discrete devices with a housing that fully contains the functional electronic circuit devices therein. Accordingly, the functional devices can be removably mechanically attached to and removed from the functional module housing and removably mechanically and electronically attached to and removed from other functional modules and/or the interface. Thus, the base station is completely modular and can be readily reconfigured by mechanically and electronically adding (plugging in) and removing functional modules and/or the interface module, and/or by removably connecting the base station with other base stations. And, the base station forms a single contiguous and uninterrupted data path and a single contiguous and uninterrupted power path, amongst the functional modules, interface, and circuits.

In summary the invention provides a flexible arrangement for small cell base stations having functional modules implementing existing and future technologies realized as one or more vertical columns of functional modules cantilever mounted at their lower end, or as one or more horizontal rows of functional modules suspended from a catenary wire.

It is usual in mobile radio networks to transmit and receive signals having linear ±45 □ slant polarization to improve the quality of the received signal and enhance the capacity of a network by taking advantage of polarization diversity. Base stations may also be equipped with multiple antennas to take advantage of MIMO operation (Multiple-Input, Multiple-Output), allowing further improvement in coverage and capacity, together with enhanced data rates.

A base station according to the invention may support both the transmission and reception of radio signals as well as cameras and sensors. The transmit signal direction is referred to in the following descriptions, but it is to be understood that all components and interfaces in the signal path support both transmitted and received signals.

Data circuits within a FIRE-NODE small cell base station may support duplex or virtual duplex, half-duplex or simplex data communication.

The invention provides for the integration of modules, each having one or more functionalities such as mobile radio, WiFi, camera or sensor. Hereinafter these will be referred to as functional modules.

A FIRE-NODE small cell base station according to the present invention can include:
(a) at least one electrical connection for the physical attachment of at least one incoming electricity supply;
(b) at least one physical communications interface, preferably using optical fiber or coaxial cable, supporting Ethernet or other selected protocol to communicate data to the FIRE-NODE, such data typically comprising user data, control data and management data, such interface being typically known as a backhaul connection;
(c) electrical circuit arrangements, comprising at least one power bus, providing for the distribution of power to all contained electrically powered circuits and devices;
(d) at least one interface to facilitate the extension of the said at least one power bus to extend the supply of power to electrically powered circuits and devices that may be installed within the FIRE-NODE, subsequent to its initial configuration, in the course of expansion of its communications or other facilities.
(e) electrical circuits and devices, comprising at least one data bus, providing bidirectional communication of data to different modules contained within the FIRE-NODE;
(f) at least one interface to facilitate the extension of the said at least one data bus to extend data connection to circuits and devices that may be installed within the FIRE-NODE subsequent to its initial configuration, in the course of expansion of its communications or other facilities;
(g) mechanical arrangements to facilitate the addition of further communications or other devices and the replacement of already installed communications or other devices, such arrangements preferably providing for the ability to add or exchange such devices with no interruption of the operation of other circuits or devices installed within the said FIRE-NODE (a capability known as hot-swapping);
(h) data processing and data storage circuits to enable intelligent management of services provided by the communications and other devices installed within the FIRE-NODE, such management comprising but being not limited to self-optimization, remote software download, remote configuration management, alarm and administration management.

The installed communications equipment in a FIRE-NODE may include electronics modules and antennas operating in different frequency bands assigned for the services provided, sourced from multiple vendors, using different communications or other technologies and serving users in different locations.

The antennas supporting radio connections from radio modules within the FIRE-NODE may be one or more of dipoles, crossed dipoles, patches, spirals, slots or other configurations dimensioned to operate at the required frequencies. The antennas may comprise arrays of such antennas arranged to provide radiation patterns suitable for the illumination of required service area and/or to support MIMO operation.

By way of an example a FIRE-NODE may comprise, within a single integrated physical housing, a cellular antenna array and beamforming unit, a WiFi antenna array and beamforming unit, a millimeter wave radio unit and antenna, a camera and a sensor unit, all connected to the fixed infrastructure by a single input power line and a single input optical signal line.

In some embodiments an optical fiber connection may be provided to at least one functional module comprised within the FIRE-Node low power base station.

It is further noted that the description and claims use several geometric or relational terms, such as circular, rounded, parallel, orthogonal, perpendicular, concentric, triangular, planar, and flat. In addition, the description and claims use several directional or positioning terms and the like, such as top, bottom, upper, lower, inner, outer, longitudinally. Those terms are merely for convenience to facilitate the description based on the embodiments shown in the figures. Those terms are not intended to limit the invention. Thus, it should be recognized that the invention can be described in other ways without those geometric, relational, directional or positioning terms. In addition, the geometric or relational terms may not be exact. For instance, walls may not be exactly perpendicular or parallel to one another but still be considered to be substantially perpendicular or parallel because of, for example, roughness of surfaces, tolerances allowed in manufacturing, etc. And, other suitable geometries and relationships can be provided without departing from the spirit and scope of the invention.

Within this specification, the various sizes, shapes and dimensions are approximate and exemplary to illustrate the scope of the invention and are not limiting. The sizes and the terms "substantially" and "about" mean plus or minus 15-20%, or in other embodiments plus or minus 10%, and in other embodiments plus or minus 5%, and plus or minus 1-2%. In addition, while specific dimensions, sizes and shapes may be provided in certain embodiments of the invention, those are simply to illustrate the scope of the invention and are not limiting. Thus, other dimensions, sizes and/or shapes can be utilized without departing from the spirit and scope of the invention.

Within this specification embodiments have been described in a way which enables a clear and concise specification to be written, but it is intended and will be appreciated that embodiments may be variously combined or separated without departing from spirit and scope of the invention. It will be appreciated that all features described herein are applicable to all aspects of the invention described herein. Each of the exemplary embodiments described above may be realized separately or in combination with other exemplary embodiments. Numerous applications of the invention will readily occur to those skilled in the art. Therefore, it is not desired to limit the invention to the specific examples disclosed or the exact construction and operation shown and described. Rather, all suitable modifications and equivalents may be resorted to, falling within the scope of the invention.

## Claims

1. An integrated radio base station comprising:
an elongate structural support member and a non-conductive dielectric cover, together forming a weather-protective housing;
an internal power bus within said housing;
an internal data bus within said housing;
a functional module having a functional electronic circuit device, a module power bus providing power to said functional electronic circuit device and a module data bus providing data to said functional electronic circuit device, said functional module further having a functional demountable power connector coupling said module power bus to said internal power bus, and a functional demountable data connector coupling said module data base to said internal data bus;
an interface module having a power electronic circuit device to interface between a source of externally provided electrical power and said internal power bus providing electrical power conditioned to be suitable for operation of said functional electronic circuit device; and
an optical and/or electronic data circuit device at said interface module to interface between an external optical fiber circuit device and/or a coaxial data transmission circuit device and said internal data bus to provide data to said functional electronic circuit device.

2. A base station according to claim 1, wherein said housing has a first end and a second end and the functional power connector and functional data connector each comprise a male connector at a proximal edge of the first end and a female connector at a proximal edge of the second end.

3. A base station according to claim 1 or 2, wherein said at least one functional module comprises radio modules operative on frequency bands licensed to mobile radio operators, radio modules operative on unlicensed frequency bands assigned to industrial, scientific and medical uses, and/or radio modules operative on frequencies assigned to Community Broadband Radio Systems and/or to other lawful radio services.

4. A base station according to claim 1, wherein said at least one functional module comprises:
data processing circuits, radio frequency transmitting and receiving circuits and at least one antenna; or
at least one camera or at least one sensor, together with associated control and interfacing circuits; or
electrical circuits and devices for data processing and storage.

5. A base station according to one of claims 1 to 4, wherein said interface module has an outwardly facing multipole demountable connector arranged on a first face of a substantially planar module and at least one antenna is provided on a second face of the module.

6. A base station according to one of claims 1 to 5, further comprising a plurality of functional modules, and wherein the elongate structural member and cover are dimensioned such that said plurality of functional modules are arranged in at least one row and at least one column.

7. A base station according to one of claims 1 to 6, further comprising a plurality of elongate structural members positioned substantially vertically and oriented such that said functional modules are aligned on more than one azimuthal bearing.

8. A base station according to one of claims 1 to 7, wherein said elongate structural support member is positioned substantially horizontally.

9. A base station according to one of claims 1 to 8, further comprising a plurality of elongate structural support members positioned substantially horizontally and oriented such that said functional modules are aligned on substantially reciprocal azimuthal bearings.

10. A base station according to claim 7 or 9, further comprising antennas situated on the functional modules and having radiation patterns arranged to produce beams whose direction of maximum radiation in an elevation plane is fixed.

11. A base station according to any of the preceding claims arranged such that the radiation patterns of antennas situated on the functional modules produce beams whose direction of maximum radiation is selectable.

12. A modular integrated base station comprising:
a first functional module having:
an interface with a power input coupled to a power source and a conditioned power output, a data input coupled to a data source, and a data output,
a first internal power bus connected to the conditioned power output,
a first internal data bus connected to the data output, and
a first functional electronic device connected to the first internal power bus and to the first data bus;
one or more second functional modules removably connected to the first functional module, each of said one or more second functional modules having:
a second internal power bus removably connected to the first internal power bus,
a second data bus removably connected to the first data bus,
a second functional electronic device connected to the second internal power bus and to the second data bus.

13. A modular integrated base station comprising a plurality of discrete functional modules each separately and removably connected to at least one other of said plurality of discrete functional modules, each functional module supporting at least one of a plurality of data communications protocols and provided with power connection by way of a common power bus and/or provided with data connection by way of at least one common data bus.

14. A base station according to claim 13, wherein each of said plurality of discrete functional modules have an interface with a power input coupled to the common power bus and a conditioned power output coupled to the module power bus.

15. A base station according to any of the claims 12-14, wherein data communications for said at least one functional module is provided using optical fiber.

16. A base station according to any of claims 12-15, wherein said internal power bus comprises a plurality of conductive paths providing power at a plurality of voltages.

17. A base station according to any of claims 12-16, further comprising a plurality of functional modules, wherein power and data bus arrangements permit the concatenation of more than one group of said plurality of functional modules, a first group having said interface module for the connection of external power and data communications on a first end and power and data bus connectors on a second end, and at least a second group having power and data bus connections on both a first end and a second end, each group being housed in a separate enclosure.
